# EUROPEAN PATENT SPECIFICATION

(11) **EP 2 022 647 B1**
(45) Date of publication and mention of the grant of the patent: **11.04.2012**
(21) Application number: 07742875.3
(22) Date of filing: 26.04.2007
(51) Int. Cl.: B60C 5/14, B29C 33/62, B29L 30/00

(54) **PNEUMATIC TIRE HAVING FLEXIBLE PROTECTIVE RELEASE LAYER**
LUFTREIFEN MIT FLEXIBLER SCHUTZTRENNSCHICHT
BANDAGE PNEUMATIQUE AYANT UNE COUCHE DE LIBERATION DE PROTECTION FLEXIBLE

(30) Priority: 01.05.2006 JP 2006127777
(43) Date of publication of application: 11.02.2009
(73) Proprietor: The Yokohama Rubber Co., Ltd., Minato-ku Tokyo 105-8685 (JP)
(72) Inventor: TOMOI, Shusaku, Hiratsuka-shi, Kanagawa 254-8601 (JP)
(74) Representative: HOFFMANN EITLE
(86) International application number: PCT/JP2007/059440
(87) International publication number: WO 2007/129680

(56) References cited:
- EP-A- 0 337 279
- EP-A- 0 469 421
- EP-A- 0 969 039
- JP-A- 01 022 509
- JP-A- 01 314 164
- JP-A- 04 226 715
- JP-A- 07 009 807
- JP-A- 11 114 970
- JP-A- 11 199 713
- JP-A- 2003 127 146
- JP-A- 2006 240 008

## Description

### TECHNICAL FIELD

The present invention relates to a pneumatic tire having a flexible mold releasable protective layer on the surface thereof, more particularly relates to a pneumatic tire provided with a flexible mold releasable protective layer on the surface of a layer of a thermoplastic resin, or a layer of a thermoplastic elastomer composition comprising a thermoplastic resin containing an elastomer component dispersed therein, arranged at the pneumatic tire, as an air permeation preventive layer.

### BACKGROUND ART

It has been proposed to arrange a layer of a thermoplastic resin, or a layer of a thermoplastic elastomer composition comprising a thermoplastic resin in which an elastomer component is dispersed, at an inside surface of a tire as an air permeation preventive layer (or an inner liner) in order to reduce the weight of the tire (e.g., see Japanese Patent Publication (A) No. 8-216610). In such a vulcanized shaped pneumatic tire with a layer of a thermoplastic resin or a layer of a thermoplastic elastomer composition arranged on its surface, in order to improve the mold release property between the inside surface of a green tire and a vulcanization bladder, when vulcanizing and molding the pneumatic tire, a mold release agent having an inorganic powder as its main component (or a green inside paint; GIP) is generally applied on the inside surface of the green tire in advance. However, if using a mold release agent mainly composed of powder, there are the problems that the mold release agent easily falls off from the inside surface of the pneumatic tire, in particular the surface of the air permeation preventive layer, due to handling of the tire and tire deformation, during runs when mounted at the rim, etc. and the appearance deteriorates and the surrounding areas are dirtied.
EP-A-0337279 describes a laminate made of a gas barrier film comprising a non-elastomeric polymer layer which is laminated between two vulcanizable elastomeric surface layers containing thermoplastic elastomers. Additionally, reinforcing agents such as carbon black may be used.

### DISCLOSURE OF THE INVENTION

Accordingly, an object of the present invention is to prevent the deterioration of tire appearance and dirtying of the surrounding areas which occur due to a mold release agent containing an inorganic powder as a main component, coated on the surface of the air permeation preventive layer, falling off when molding and vulcanizing a pneumatic tire using a thermoplastic resin layer, or a layer of a thermoplastic elastomer composition comprising a thermoplastic resin in which an elastomer component is dispersed, as an air permeation preventive layer.

In accordance with the present invention, there is provided a pneumatic tire comprising a layer of a thermoplastic resin or a layer of a thermoplastic elastomer composition comprising a thermoplastic resin containing an elastomer component dispersed therein, as an air permeation preventive layer arranged at an inside surface of a tire cavity, and a mold releasable protective layer containing an inorganic powder and a polymer further arranged on the surface of the layer of thermoplastic resin or the layer of the thermoplastic elastomer composition, wherein the resultant assembly is vulcanized and molded and wherein the polymer compound is compounded as latex.

According to the present invention, by arranging, at the surface of a green tire contacting the surface of the tire vulcanization bladder at the time of vulcanization and molding, a flexible mold releasable protective layer comprising, as a mold release agent applied to the surface of the air permeation preventive layer, in particular, a mold release agent having, for example, talc, mica, zinc oxide, silica, calcium carbonate, alumina, magnesium oxide, titanium oxide, metal powder and/or carbon black or other inorganic powders, as a main component, to which a polymer component is compounded, it is possible to obtain a pneumatic tire preventing the inorganic powder of the mold release agent from falling off from the surface of the air permeation preventive layer containing the thermoplastic resin or thermoplastic elastomer composition (i.e., the inside surface of the tire cavity).

### BEST MODE FOR CARRYING OUT THE INVENTION

The present inventors engaged in research in order to solve the above problem, that is, the problem of the inorganic powder in the mold release agent falling off from the surface of the pneumatic tire, where a layer of a thermoplastic resin or a layer of a thermoplastic elastomer composition containing a thermoplastic resin, in which an elastomer component is dispersed, is arranged as an air permeation preventive layer at the product surface, in particular from the surface of the air permeation preventive layer, and causing deterioration of the tire appearance and contamination of the surrounding environment and, as a result, succeeded in obtaining a pneumatic tire which solved said problem by compounding a polymer component into a mold release agent containing an inorganic powder to form a protective layer and vulcanizing and molding the assembly.

In this way, according to the present invention, it was found that the above-mentioned problem can be solved by arranging a mold releasable protective layer including a mold releasable inorganic powder and a polymer component at the surface of the thermoplastic resin or the thermoplastic elastomer composition containing the thermoplastic resin, in which the elastomer component is dispersed. The method of application of this protective layer is not particularly limited. For example, it can be applied to the surface of the air permeation preventive layer in a state dissolved or dispersed in a solvent.

As the mold releasable protective layer usable in the present invention, by mixing a mold release agent such as an oil-in-water type emulsion of silicone oil (i.e., silicone emulsion) or other conventional mold release agent, etc., and mica, talc, silica, calcium carbonate, alumina, magnesium oxide, titanium oxide, metal powder, or other inorganic powders having a large lubricating property, and, furthermore optionally, a surfactant and by further compounding, the polymer component, flexibility, water resistance, and durability are imparted and the effect is sustained for a long term. In this way, the pneumatic tire according to the present invention is characterized in that a mold release agent having a silicone emulsion and inorganic powder, as main components, and further including a polymer component is coated, as a protective layer, on the inside wall surface of the tire, in particular the surface of the air permeation preventive layer.

The mold release agent usable in the present invention, from the viewpoints of the easy handling and the quality of the adhesion of the air permeation preventive layer on the surface, is a water-based mold release agent composed of an oil-in-water type emulsion containing silicone oil having a viscosity, measured by JIS K 2283, of preferably 100 to 1,000,000 cSt (25°C), more preferably 100,000 to 1,000,000 cSt (25°C) emulsified with an emulsifier, an inorganic powder (e.g., talc, mica, zinc oxide, silica, calcium carbonate, alumina, magnesium oxide, titanium oxide, metal powder, carbon black, a surfactant (e.g., a cationic surfactant, anionic surfactant, amphoteric surfactant or non-ionic surfactant), water, in which a polymer component is compounded. As the polymer component, a polyolefin-based resin (e.g., polyethylene, polypropylene, polyvinyl alcohol, ethylene vinyl alcohol copolymer, vinyl acetate, ethylene vinyl acetate copolymer, acrylic resin, polyvinyl chloride, polyvinylidene chloride and polybutene), Nylon (e.g., 6 Nylon, 11 Nylon, and 6,6 Nylon), polyester (e.g., polyethylene terephthalate (PET), polyethylene naphthalate (PEN) and polybutylene terephthalate (PBT)), polycarbonate, polyimide, polyurethane, butyl-based rubber (e.g., butyl rubber (IIR), brominated butyl rubber (Br-IIR), chlorinated butyl rubber (CI-IIR), isobutylene paramethylstyrene copolymer (IMS), brominated isobutylene-paramethylstyrene copolymer (BIMS)), a diene-based rubber (e.g., natural rubber (NR), styrene butadiene rubber (SBR), butadiene rubber (BR), isoprene rubber (IR), and nitrile rubber (NBR)), olefin-based rubber (ethylene vinyl acetate copolymer (EVA)), ethylene-propylene rubber (EPM and EPDM)), urethane-based rubber, acrylic-based rubber, silicone-based rubber may be mentioned, which are compounded as a latex.

In order to intend a water-based mold release agent, a water-dispersion type latex is optimal in the present invention. As the polymer component in the latex, a diene-based rubber (SBR, NR, BR, IR or NBR), butyl-based rubber (II-R, Br-IIR, CI-IIR, IMS or BIMS), ethylene propylene-based rubber (EPM and EPDM), olefin-based rubber (EVA), urethane-based rubber, acrylic-based rubber, silicone-based rubber may be mentioned. Further, the concentration of the polymer component of the latex is not particularly limited, but a 30 to 70% by weight or so is preferable. If this concentration of the component is small, the amount of the polymer component in the mold release agent may not reach the desired amount, while conversely, if it is large, the resultant latex is sticky and hard to handle and further poor dispersion may result.

The amount of the polymer component compounded is preferably larger than 0 to less than 50% by weight, more preferably 5 to 25% by weight, most preferably 8 to 15% by weight, based upon the solid content weight of the mold release agent. If the amount compounded is small, the falling off of the inorganic powder in the mold release agent is liable not to be prevented, while conversely if large, the mold release property to the bladder rubber is liable to decrease.

The amount of the inorganic powder compounded is preferably larger than 50% by weight to less than 100% by weight, more preferably 75 to 95% by weight, and most preferably 85 to 92% by weight, in terms of the ratio, based upon the solid content weight in the protective layer. If the amount compounded is small, the mold release property to the bladder rubber is liable to fall, while conversely if it is large, the inorganic powder is liable to fall off from the surface of the air permeation preventive layer.

The mold releasable protective layer according to the present invention may include, in addition to the above-mentioned silicone oil emulsion, inorganic powder, various surfactants, water, polymer component, etc., various additives in a range not detracting from the effects of the present invention. As such additives, for example, preservatives (e.g., sodium nitrite and sodium benzoate), binders (e.g., casein, lecithin, albumin, polyvinyl alcohol, carboxymethyl cellulose, polyolefin-based resin powder). may be mentioned.

The compounding order of these components is not particularly limited, but it is possible to first add the surfactants to the water to dissolve them, add a water soluble binder, if necessary, then add a latex, then add the silicone emulsion, the inorganic powder and the like.

As typical thermoplastic resins usable to form the air permeation preventive layer in the present invention, polyamide-based resins (e.g., Nylon6 (N6), Nylon66 (N66), Nylon46 (N46), Nylon11 (N11), Nylon12 (N12), Nylon610 (N610), Nylon612 (N612), Nylon6/66 copolymer (N6/66), Nylon6/66/610 copolymer (N6/66/610), NylonMXD6 (MXD6), Nylon6T, Nylon6/6T copolymer, Nylon66/PP copolymer, Nylon66/PPS copolymer and their N-alkoxyalkyl compounds), polyester-based resins (e.g., polybutylene terephthalate (PBT), polyethylene terephthalate (PET), polyethylene isophthalate (PE10), PET/PEI copolymer, polyarylate (PAR), polybutylene naphthalate (PBN), liquid crystal polyester, polyoxyalkilene diimide acid/polybutyrate terephthalate copolymer and other aromatic polyesters), polynitrile-based resins (e.g., polyacrylonitrile (PAN), polymethacrylonitrile, acrylonitrile/styrene copolymer (AS), methacrylonitrile/styrene copolymer, methacrylonitrile/styrene/butadiene copolymer), polymethacrylate-based resins (e.g., polymethyl methacrylate (PMMA), polyethyl methacrylate), polyvinyl acetate-based resins (e.g., vinyl acetate (PVA), ethylene/vinyl acetate copolymer (EVA)), polyvinyl alcohol-based resins (e.g., polyvinyl alcohol (PVOH), vinyl alcohol/ethylene copolymer (EVOH)), polyvinyl chloride-based resins (e.g., polyvinylidene chloride (PVDC), polyvinyl chloride (PVC), vinyl chloride/vinylidene chloride copolymer, vinylidene chloride/methyl acrylate copolymer, vinylidene chloride/acrylonitrile copolymer), cellulose-based resins (e.g., acetyl cellulose, cellulose acetate butyrate), fluorine-based resins (e.g., polyvinylidine difluoride (PVDF), polyvinylidine fluoride (PVF), polychlorofluoroethylene (PCTFE), tetrafluoroethylene/ethylene copolymer), imide-based resins (e.g., aromatic polyimide (PPI)) can be mentioned. These may be used alone or in any blend thereof.

On the other hand, another material forming the air permeation preventive layer according to the present invention, that is, the thermoplastic elastomer composition, comprises a thermoplastic resin, as stated above, in which an elastomer component is dispersed. One in which the thermoplastic resin and the elastomer component are combined in one or more types, respectively, may be mentioned. The elastomer component is not particularly limited, but a diene-based rubber and its hydrogenated products (e.g., NR, IR, epoxidized natural rubber, SBR, BR (high cis BR and low cis BR), NBR, hydrogenated NBR, and hydrogenated SBR), olefin-based rubber (e.g., ethylene propylene rubber (EPDM and EPM), maleic acid modified ethylene propylene rubber (M-EPM), IIR, an isobutylene and aromatic vinyl or diene monomer copolymer, acrylic rubber (ACM), halogen-containing rubber (e.g., Br-IIR, CI-IIR, a bromide of isobutylene paramethyl styrene copolymer (Br-IPMS), CR, hydrin rubber (CHR·CHC); chlorosulfonated polyethylene (CSM), chlorinated polyethylene (CM), maleic acid modified chlorinated polyethylene (M-CM)), silicone rubber (e.g., methylvinyl silicone rubber, dimethyl silicone rubber, methylphenylvinyl silicone rubber), sulfur-containing rubber (e.g., polysulfide rubber), fluorine rubber (e.g., vinylidene fluoride-based rubber, fluorine-containing vinyl ether-based rubber, tetrafluoroethylene propylene-based rubber, fluorine-containing silicone-based rubber, fluorine-containing phosphagen-based rubber), thermoplastic elastomer (e.g., styrene-based elastomer, olefin-based elastomer, polyamide-based elastomer) can be mentioned. These may be used alone or in any blend thereof.

The thermoplastic resin or thermoplastic elastomer composition, in addition to the above essential components, may contain, to a range which does not impair the required properties of the tire polymer composition of the present invention, a compatibilizing agent, anti-oxidant, vulcanizing agent, vulcanization accelerator, vulcanization promoter, vulcanization retardant, plasticizer, filler, coloring agent, processing aid and other additives.

The air permeation preventive layer may be a thermoplastic film of just the thermoplastic resin or the thermoplastic elastomer composition, but it is preferable to use a laminate of the thermoplastic film and a binder layer having tackiness with respect to rubber. As such a binder layer, for example, a composition comprised of a rubber component (for example, natural rubber, styrenebutadiene rubber, isobutylene-isoprene rubber, butadiene rubber, polyisobutylene, polyisoprene, styrene-butadienestyrene block copolymer, styrene-isoprene-styrene block copolymer and their epoxy modified products and maleic acid modified products) into which a rubber ingredient (e.g., carbon black, calcium carbonate, silica), an adhesive resin (e.g., resorcin-formaldehyde resin, alkylphenol-formaldehyde resin), tackifier (e.g., terpene resin, terpene phenol resin, modified terpene resin, hydrogenated terpene resin, rosin ester, alicyclic saturated hydrocarbon resin) is blended and to which, furthermore, a vulcanizing agent, vulcanization accelerator, oil, anti-oxidant, plasticizer, etc. are suitably blended or a phenol resin-based (e.g., Chemlok 220), chlorinated rubber (e.g., Chemlok 205) and isocyanate-based (e.g., Chemlok 402) adhesive.

### EXAMPLES

Examples will now be used to explain the present invention further.

### Standard Example 1 and Examples 1 and 2

The conventional Standard Example 1 poor in retention of the mold release agent to the inside surface of a tire and Examples 1 and 2 according to the present invention were tested using the mold release agents of the formulations shown below (see Table I).

**Table I**

| Content of formulation of mold release agent | Standard Example 1 | Example 1 | Example 2 |
|---|---|---|---|
| Compounded component | Amount compounded (parts by weight) | | |
| Silicone emulsion*1 | 7.5 | 7.5 | 7.5 |
| Fine mica powder*2 | 15 | 12 | 11.5 |
| Fine talc powder*3 | 30 | 24 | 22 |
| Surfactant*4 | 2 | 2 | 2 |
| Carbon black*5 | 0.5 | - | 2.5 |
| Latex*6 | - | 9.5 | 9.5 |
| Water | 45 | 45 | 45 |
| Total | 100 | 100 | 100 |

| | | | |
|---|---|---|---|
| Notes of Table I *1: Silicone Emulsion SH490 made by Dow Corning Toray Silicone *2: Fine Mica Powder FS Maruai made by Sanshin Mining & Manufacturing *3: Fine Talc Powder SP50A made by Fuji Talc Industries *4: Surfactant BY-22-721 made by Dow Corning Toray Co. Ltd. Silicone *5: Carbon Black MA-600 made by Mitsubishi Carbon *6: Nipol LX110 (SBR latex; solid content 40.5%) made by Zeon Corporation | | | |

### Preparation of Mold Release Agent

### Mold Release Agent of Standard Example 1

According to formulation of Standard Example 1 of Table I, a silicone emulsion, water and surfactant were stirred to obtain a dispersion, then the fine mica powder, fine talc powder and carbon black were gradually added thereto to obtain a mold release agent.

### Mold Release Agent of Example 1

According to formulation of Example 1 of Table I, a silicone emulsion, water and surfactant were added, while stirring to obtain a dispersion, then the latex was added thereto and stirred, then the fine mica powder and fine talc powder were added to obtain a mold release agent.

### Mold Release Agent of Example 2

According to formulation of Example 2 of Table I, a silicone emulsion, water and surfactant were stirred to obtain a dispersion, then latex was added and stirred, then carbon black was gradually added and made to disperse, then the fine mica powder and fine talc powder were gradually added to obtain a mold release agent.

### Formation of Evaluation Tire

### Preparation of Thermoplastic Elastomer Composition

Using the compounding ratios (parts by weight) shown in Table II, the resin, rubber material and cross-linking compounding agents required for dynamic cross-linking were mixed by a twin screw extruder at a temperature of 230°C to obtain a thermoplastic elastomer composition composed of a thermoplastic resin forming a continuous phase, in which the rubber is finely dispersed. This was extruded in strand shapes from the discharge port of the twin screw extruder. The strands thus obtained were cut by a cutter into pellet shapes to thereby fabricate pellets of the thermoplastic elastomer compositions of Standard Example 1, Example 1 and Example 2.

**Table II**

| | Standard Example 1 | Example 1 | Example 2 |
|---|---|---|---|
| Components of formulation | Amount compounded (parts by weight) | | |
| Nylon11*1 | 24 | 24 | 24 |
| Nylon6.66*2 | 16 | 16 | 16 |
| BIMS*3 | 60 | 60 | 60 |
| Zinc oxide*4 | 0.3 | 0.3 | 0.3 |
| Stearic acid*5 | 1.2 | 1.2 | 1.2 |
| Zinc stearate*6 | 0.6 | 0.6 | 0.6 |

| | | | |
|---|---|---|---|
| *1: BESN O TL made by Arkema *2: 5033B made by Ube Industries, Ltd. *3: Exxpro MDX89-4 made by Exxon Mobil Chemicals *4: Zinc Oxide #3 made by Seido Chemical Industry Co., Ltd. *5: Beads Stearic Acid made by NOF Corporation *6: Zinc Stearate made by Seido Chemical Industry Co., Ltd. | | | |

### Preparation of Adhesive Composition

In order to attach the thermoplastic elastomer composition to the inside surface of a tire, the thermally cross-linkable polymer and the tackifier were sufficiently mixed at a temperature of 100°C by the compounding ratio (parts by weight) shown in Table III using a twin screw extruder and extruded in strand shapes from the discharge port. The thus obtained strands, were water-cooled, then cut by a cutter into pellets to obtain the pellets of the adhesive composition.

**Table III**

| Component of formulation | Amount compounded (parts by weight) |
|---|---|
| Epoxy modified SBS*1 | 50 |
| SBS*2 | 50 |
| Tackifier*3 | 100 |
| Zinc oxide*4 | 3 |
| Stearic acid*5 | 1 |
| Peroxide*6 | 1 |

| | |
|---|---|
| *1: Epofriend A1020 made by Daicel Chemical Industries Ltd. *2: Tufprene 315 made by Asahi Kasei Corporation *3: Pencel AD made by Arakawa Chemical Industries, Ltd. *4: Zinc Oxide #3 made by Seido Chemical Industry Co., Ltd. *5: Beads Stearic Acid made by NOF Corporation *6: Parcadox 14 made by Kayaku Akzo Corp. | |

### Inflation Molding

Using the pellets of the thermoplastic elastomer composition and adhesive composition, a general two-layer inflation molding system was used for inflation molding of a laminate film at a temperature of 230°C to obtain a laminate film of the thermoplastic elastomer composition and the tackifier adhesive composition. The thermoplastic elastomer composition thickness was 200 µm and the tackifier adhesive composition thickness was 50 µm.

### Tire Formation

The multiple layer film was wound on a tire shaping drum so that the thermoplastic elastomer composition became the drum side and the tackifier adhesive composition became the tire member side, the tire members were stacked over that, and the assembly was inflated to form a green tire, then the inner linear of the inside surface of the tire was coated with the mold release agent by a spray gun, then the assembly was dried, then vulcanized (conditions: 180°Cx10 min) to form a tire having a tire size 165SR13.

### Evaluation of Water Resistance

Tires formed using the mold release agents of Standard Example 1 and Examples 1 and 2 by the above method were laid on the ground on their sides for 3 months outdoors, then the inside surfaces of the tires were visually observed. When rainwater caused the mold release agent to fall off, the tire was judged to have no water resistance ("poor"), while when the mold release agent did not fall off, the tire was judged to have water resistance ("good"), so as to evaluate the water resistance. The results are shown in Table IV. As shown in Table IV, Standard Example 1 not containing any polymer was poor in water resistance, while Examples 1 and 2 containing polymers were good in water resistance.

### Evaluation of Retention

A 165SR13 steel radial tire (rim: 13x41/2-J) not allowed to stand outside after shaping was run on at an air pressure of 140 kPa and a load of 5.5 kN on an actual road for 10,000 km. After running, the tire was detached from the rim. When the mold release agent layer fell off from the inside surface of the run on tire, the tire was judged to not have retention ("poor"), while when it did not fall off, the tire was judged to have retention ("good"), to evaluate the retention to the inside surface of a tire. The results are shown in Table IV. Standard Example 1 not containing any polymer was poor in retention, while Examples 1 and 2 containing polymers were good in retention.

**Table IV**

| Specifications | Water resistance | Retention |
|---|---|---|
| Standard Example 1 | Poor | Poor |
| Example 1 | Good | Good |
| Example 2 | Good | Good |

### INDUSTRIAL APPLICABILITY

As explained above, according to the present invention, by compounding a polymer with a mold release agent having an inorganic powder, as a main component, used at the time of vulcanization and molding, it is possible to suppress detachment of the mold release agent. Further, it is possible to provide a pneumatic tire where a thermoplastic resin or a thermoplastic elastomer composition containing a thermoplastic resin, in which an elastomer component is dispersed, is arranged at the inside surface, wherein the inside surface is formed with a protective layer having flexibility, water resistance and retention to the surface and the durability is good.

## Claims

1. A pneumatic tire comprising a layer of a thermoplastic resin or a layer of a thermoplastic elastomer composition comprising a thermoplastic resin containing an elastomer component dispersed therein, as an air permeation preventive layer arranged at an inside surface of a tire cavity, and a mold releasable protective layer containing an inorganic powder and a polymer component further arranged on the surface of the layer of thermoplastic resin or the layer of the thermoplastic elastomer composition, the resultant assembly being vulcanized and molded, **characterized in that** the polymer compound is compounded as a latex.

2. A pneumatic tire as claimed in claim 1, wherein said protective layer comprises an inorganic powder containing a polymer component compounded therein, whereby flexibility, water resistance and mold release property and retention to the tire inside wall surface are imparted.

3. A pneumatic tire as claimed in claim 1 or 2, wherein the amount of said polymer component compounded is larger than 0% by weight and less than 50% by weight based upon the solid content weight in the protective layer.

4. A pneumatic tire as claimed in any one of claims 1 to 3, wherein the latex polymer component contains at least one rubber selected from the group consisting of a diene-based rubber, butyl-based rubber, ethylene propylene-based rubber, olefin-based rubber, urethane-based rubber, acrylic-based rubber and silicone-based rubber.

5. A pneumatic tire as claimed in any one of claims 1 to 4, wherein said inorganic powder is talc, mica, zinc oxide, silica, calcium carbonate, alumina, magnesium oxide, titanium oxide, metal powder and/or carbon black.

6. A pneumatic tire as claimed in any one of claims 1 to 5, wherein the amount of said inorganic powder compounded is larger than 50% by weight and less than 100% by weight, based upon a solid content weight in the protective layer.

7. A pneumatic tire as claimed in any one of claims 1 to 6, wherein said thermoplastic resin is at least one resin selected from the group consisting of polyamide-based resins, polyester-based resins, polynitrile-based resins, polymethacrylate-based resins, polyvinyl acetate-based resins, polyvinyl alcohol-based resins, polyvinyl chloride resins, cellulose-based resins, fluorine-based resins and imide-based resins.

8. A pneumatic tire as claimed in any one of claims 1 to 7, wherein said elastomer component is at least one component selected from the group consisting of diene-based rubber, olefin-based rubber, sulfur-containing rubber, fluorine rubber and thermoplastic elastomers.

## Patentansprüche

1. Pneumatischer Reifen, umfassend eine Schicht aus einem thermoplastischen Harz oder eine Schicht aus einer thermoplastischen Elastomerzusammensetzung, umfassend ein thermoplastisches Harz, umfassend eine Elastomerkomponente, die darin dispergiert ist, als Luftpermeation-verhindernde Schicht, die an einer Innenseite eines Reifenhohlraums angeordnet ist, und eine formfreisetzbare Schutzschicht, umfassend ein anorganisches Pulver und eine Polymerkomponente, die weiterhin auf der Oberfläche der Schicht aus dem thermoplastischen Harz oder der Schicht aus der thermoplastischen Elastomerzusammensetzung angeordnet ist, wobei der resultierende Zusammenbau vulkanisiert und geformt ist, **dadurch gekennzeichnet, dass** die Polymerverbindung als Latex hergestellt ist.

2. Pneumatischer Reifen nach Anspruch 1, worin die Schutzschicht ein anorganisches Pulver umfasst, umfassend eine Polymerkomponente, die darin vermischt ist, wodurch Flexibilität, Wasserresistenz und Formfreisetzungseigenschaften und Retention der Reifeninnenwandoberfläche verliehen werden.

3. Pneumatischer Reifen nach Anspruch 1 oder 2, worin die Menge der zugegebenen Polymerkomponente größer als 0 Gew.-% und weniger als 50 Gew.-% ist, bezogen auf das Gewicht des Feststoffgehaltes in der Schutzschicht.

4. Pneumatischer Reifen nach einem der Ansprüche 1 bis 3, worin die Latexpolymerkomponente zumindest einen Kautschuk umfasst, ausgewählt aus der Gruppe bestehend einem Kautschuk auf Dienbasis, Kautschuk auf Butylbasis, Kautschuk auf Ethylen-Propylenbasis, Kautschuk auf Olefinbasis, Kautschuk auf Urethanbasis, Kautschuk auf Acrylbasis und Kautschuk auf Silikonbasis.

5. Pneumatischer Reifen nach einem der Ansprüche 1 bis 4, worin das anorganische Pulver Talkum, Mika, Zinkoxid, Siliziumoxid, Calciumcarbonat, Aluminiumoxid, Magnesiumoxid, Titandioxid, Metallpulver und/oder Ruß ist.

6. Pneumatischer Reifen nach einem der Ansprüche 1 bis 5, worin die Menge des anorganischen Pulvers, das vorhanden ist, größer als 50 Gew.-% und weniger als 100 Gew.-% bezogen auf das Gewicht des Feststoffes in der Schutzschicht ist.

7. Pneumatischer Reifen nach einem der Ansprüche 1 bis 6, worin das thermoplastische Harz zumindest ein Harz ist, ausgewählt aus der Gruppe bestehend aus Harzen auf Polyamidbasis, Harzen auf Polyesterbasis, Harzen auf Polynitrilbasis, Harzen auf Polymethacrylatbasis, Harzen auf Polyvinylacetatbasis, Harzen auf Polyvinylalkoholbasis, Polyvinylchloridharzen, Harzen auf Cellulosebasis, Harzen auf Fluorbasis und Harzen auf Imidbasis.

8. Pneumatischer Reifen nach einem der Ansprüche 1 bis 7, worin die Elastomerkomponente zumindest eine Komponente ist, ausgewählt aus der Gruppe bestehend aus Kautschuk auf Dienbasis, Kautschuk auf Olefinbasis, Kautschuk auf Schwefelbasis, Fluorkautschuk und thermoplastischen Elastomeren.

## Revendications

1. Bandage pneumatique ayant une couche en une résine thermoplastique ou une couche en une composition d'élastomère thermoplastique comprenant une résine thermoplastique contenant un composant élastomère dispersé dans celle-ci, en tant que couche prévenant la perméation de l'air agencée à une surface intérieure d'une cavité de bandage, et une couche de protection de libération de moule contenant une poudre inorganique et un composant polymère agencé en outre sur la surface de la couche en résine thermoplastique ou la couche de la composition d'élastomère thermoplastique, l'ensemble obtenu étant vulcanisé et moulé, **caractérisé en ce que** le composé polymère est compoundé comme un latex.

2. Bandage pneumatique selon la revendication 1, où ladite couche de protection comprend une poudre inorganique contenant un composant polymère compoundé dans celle-ci, où la flexibilité, la résistance à l'eau et la propriété de libération du moule et la retenue à la surface de paroi intérieure du bandage sont imparties.

3. Bandage pneumatique selon la revendication 1 ou 2, où la quantité dudit composant polymère compoundé est plus grande que 0% en poids et plus petite que 50% en poids basée sur le poids en teneur solide dans la couche de protection.

4. Bandage pneumatique selon l'une quelconque des revendications 1 à 3, où le composant polymère en latex contient au moins un caoutchouc sélectionné dans le groupe consistant en un caoutchouc à base de diène, caoutchouc à base de butyle, caoutchouc à base d'éthylène propylène, caoutchouc à base d'oléfine, caoutchouc à base d'uréthane, caoutchouc à base acrylique, et caoutchouc à base de silicone.

5. Bandage pneumatique selon l'une quelconque des revendications 1 à 4, où ladite poudre inorganique est le talc, mica, oxyde de zinc, silice, carbonate de calcium, alumine, oxyde de magnésium, oxyde de titane, poudre métallique et/ou noir de carbone.

6. Bandage pneumatique selon l'une quelconque des revendications 1 à 5, où la quantité de ladite poudre inorganique compoundée est plus grande que 50% en poids et plus petite que 100% en poids, basée sur un poids en teneur solide dans la couche de protection.

7. Bandage pneumatique selon l'une quelconque des revendications 1 à 6, où ladite résine thermoplastique est au moins une résine sélectionnée dans le groupe consistant en résines à base de polyamide, résines à base de polyester, résines à base de polynitrile, résines à base de polyméthacrylate, résines à base de polyvinyl acétate, résines à base d'alcool polyvinylique, résines de polyvinyl chlorure, résines à base de cellulose, résines à base de fluor et résines à base d'imide.

8. Bandage pneumatique selon l'une quelconque des revendications 1 à 7, où ledit composant élastomère est au moins un composant sélectionné dans le groupe consistant en caoutchouc à base de diène, caoutchouc à base d'oléfine, caoutchouc contenant du soufre, caoutchouc de fluor et élastomères thermoplastiques.
